Europäisches Patentamt

European Patent Office

Office européen des brevets

(11) Veröffentlichungsnummer: **0 514 396 B1**

## EUROPÄISCHE PATENTSCHRIFT

(45) Veröffentlichungstag der Patentschrift: **20.07.94**

(51) Int. Cl.5: **G01C 19/72**

(21) Anmeldenummer: **91902413.3**

(22) Anmeldetag: **23.01.91**

(86) Internationale Anmeldenummer:
**PCT/EP91/00121**

(87) Internationale Veröffentlichungsnummer:
**WO 91/11682 (08.08.91 91/18)**

(54) **VERFAHREN UND ANORDNUNG ZUM ERMITTELN VON WINKELGESCHWINDIGKEITEN.**

(30) Priorität: **05.02.90 DE 4003326**

(43) Veröffentlichungstag der Anmeldung:
**25.11.92 Patentblatt 92/48**

(45) Bekanntmachung des Hinweises auf die
Patenterteilung:
**20.07.94 Patentblatt 94/29**

(84) Benannte Vertragsstaaten:
**DE FR GB IT**

(56) Entgegenhaltungen:
**US-A- 4 765 739**

**Conference Proceedings OFS'84, 2nd International Conference on Optical Fiber Sensors, 5-7 September 1984, Stuttgart, DE, VDE-Verlag GmbH (Berlin, DE), K. Böhm et al: "Fiber optic gyro with digital data processing", pages 251-258**

(73) Patentinhaber: **TELDIX GMBH**
**Postfach 10 56 08,**
**Grenzhöfer Weg 36**
**D-69046 Heidelberg(DE)**

(72) Erfinder: **WOLF, Robert**
**Eichenweg 18**
**D-6942 Mörlenbach(DE)**

(74) Vertreter: **Wiechmann, Manfred, Dipl.-Ing.**
**ANT Nachrichtentechnik GmbH**
**Patentabteilung**
**Postfach 30 00**
**D-71520 Backnang (DE)**

**Beschreibung**

Die vorliegende Erfindung betrifft ein Verfahren und eine Anordnung zum Ermitteln von Winkelgeschwindigkeiten mit Hilfe eines optischen Faserringinterferometers, wobei die mindestens eine Lichtleitfaserwindung durchlaufenden Lichtwellen sinusförmig phasenmoduliert werden und von einigen Spektrallinien der aus der Lichtleitfaser austretenden interferierenden Lichtwellen die Amplituden bestimmt werden und daraus die der Winkelgeschwindigkeit proportionale Sagnac-Phase ermittelt wird.

Ein Verfahren und eine Anordnung dieser Art geht aus der DE 31 40 110 A1 hervor. In der einen ringförmigen Lichtweg bildenden Lichtleitfaser des Ringinterferometers breiten sich zwei gegenläufige Lichtwellen aus, die beim Austritt aus der Lichtleitfaser miteinander interferieren. Die Interferenz hängt von der Winkelgeschwindigkeit ab, mit der die mindestens eine Windung bildende Lichtleitfaser gedreht wird. Der Winkelgeschwindigkeit ist die Phasendifferenz zwischen den beiden Lichtwellen, welche die Lichtleitfaser in entgegengesetzte Richtungen durchlaufen haben, proportional.

Diese Phasendifferenz, sie wird als Sagnac-Phase bezeichnet, läßt sich, wie der DE 31 40 110 A1 zu entnehmen ist, aus den Amplituden der Spektrallinien des aus der Lichtleitfaser austretenden Interferenzlichts bestimmen. Das Verfahren gemäß der DE 31 40 110 A1, nach dem die Sagnac-Phase aus der Amplitude zweier Spektrallinien ermittelt wird, verlangt, daß der Modulationsindex der am Ausgang des Lichtweges erfolgenden Phasenmodulation mit einer Regelschaltung auf einem konstanten Wert gehalten wird.

Der Erfindung liegt nun die Aufgabe zugrunde, ein Verfahren und eine Anordnung der eingangs genannten Art anzugeben, womit sich ohne eine den Modulationsindex der Phasenmodulation konstant haltende Regelschaltung die der Winkelgeschwindigkeit proportionale Sagnac-Phase ermitteln läßt.

Erfindungsgemäß wird diese Aufgabe durch die Merkmale der Ansprüche 1 und 2 gelöst. Eine vorteilhafte Ausbildung der erfundenen Anordnung geht aus dem Anspruch 3 hervor.

Aufgrund der Erfindung kann auf eine aufwendige Regelschaltung verzichtet werden, da hier der Einfluß des Modulationsindex bei der Ermittlung der Sagnac-Phase umgangen wird.

Anhand eines in der Zeichnung dargestellten Ausführungsbeispiels wird nachfolgend die Erfindung näher erläutert.

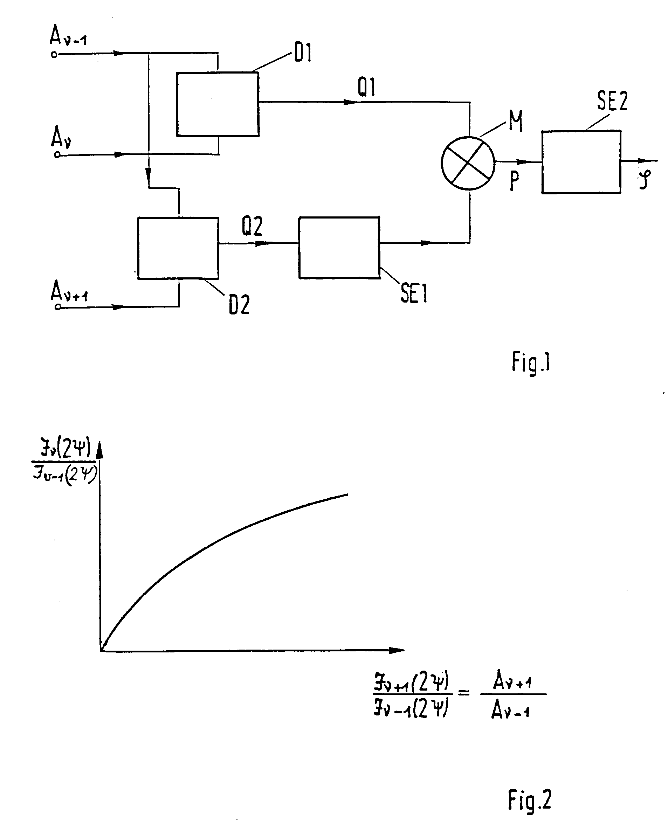

Die Figur 1 zeigt ein Schaltbild, einer möglichen Ausführung des erfindungsgemäßen Verfahrens und Fig. 2 zeigt eine Beziehung zwischen verschiedenen Besselfunktionen.

Das optische Ausgangssignal der Lichtleitfaser eines Ringinterferometers wird in bekannter Weise zur Weiterverarbeitung in ein elektrisches Signal umgewandelt. Dieses elektrische Ausgangssignal $i(t)$ des optischen Faserringinterferometers ist, wie allgemein bekannt, gegeben durch:

$$i(t) = 2I_o \cos^2 \cdot \{1/2[2\phi + \psi_o \sin 2\pi f_m t - \psi_o \sin 2\pi f_m (t - \tau)]\} \qquad (1).$$

In dieser Beziehung gibt $I_o$ die Intensität des in die Lichtleitfaser eingespeisten Lichts, $\phi$ die Sagnac-Phase, $\psi_o$ den Modulationsindex der mit der Frequenz $f_m$ durchgeführten sinusförmigen Phasenmodulation und $\tau$ die Laufzeit der Lichtwellen durch die Lichtleitfaser an.

Die zu ermittelnde Meßgröße, die Winkelgeschwindigkeit $\Omega$ des Faserringinterferometers, ist proportional zur Sagnac-Phase

$$\Omega = \frac{\lambda \cdot c}{8\pi N \cdot A} \, \phi \qquad (2).$$

Hier ist $\lambda$ die Wellenlänge des in die Lichtleitfaser eingespeisten Lichts, $c$ die Lichtgeschwindigkeit, $A$ die von der Lichtleitfaser umschlossene Fläche und $N$ die Anzahl der Lichtleitfaserwindungen.

Die Beziehung (2) zeigt also, daß die zu messende Winkelgeschwindigkeit $\Omega$ direkt von der Sagnac-Phase $\phi$ abhängt. Es gilt also nun, die Sagnac-Phase $\phi$ aus dem Ausgangssignal $i(t)$ des Faserringinterferometers zu ermitteln.

Mit den Additionstheoremen

$\cos x/2 = \pm \sqrt{(1 + \cos x)/2}$ ,
$\sin x - \sin y = 2\cos[(x + y)/2] \sin[(x - y)/2]$

und den Abkürzungen

$$\psi = \psi_o \sin\pi f_m\tau = \psi_o \sin\alpha$$

folgt aus Gleichung (1)

$$i(t) = I_o \{1 + \cos [2\phi (t) + 2\psi\cos (2\pi f_m t-\alpha)\}] \qquad (3)$$

und daraus mit

$$\cos(x + y) = \cos x \cos y - \sin x \sin y$$
$$i(t) = I_o \{1 + \cos [2\phi(t)] \cos [2\psi\cos (2\pi f_m t-\alpha)]$$
$$- \sin [2\phi(t)] \sin [2\psi\cos (2\pi f_m t-\alpha)] \qquad (4).$$

Mit Besselfunktionen der ersten Art läßt sich Gleichung (4) in eine für die Signalauswertung geeignete Form umschreiben.

$$i(t) = I_o \{1 + \cos 2\phi$$

$$[J_o(2\psi) + 2\sum_{\nu=1}^{\infty} (-1)^{\nu} J_{2\nu} (2\psi) \cos 2\nu (2\pi f_m t-\alpha)]$$

$$-\sin 2\phi [2\sum_{\nu=0}^{\infty} (-1)^{\nu} J_{2\nu+1} (2\psi) \cos (2\nu +1) (2\pi f_m t-\alpha)]\} \qquad (5).$$

Dieses Ausgangssignal $i(t)$ läßt sich in seine einzelnen Spektrallinien aufgegliedert folgendermaßen schreiben:

$$\begin{aligned}
i(t) = \ & I_o[1 + J_o(2\psi) \cos 2\phi]\\
& -2I_oJ_1(2\psi) \sin 2\phi \cos \quad (2\pi f_m t-\alpha)\\
& -2I_oJ_2(2\psi) \cos 2\phi \cos 2 (2\pi f_m t-\alpha) \qquad (6)\\
& +2I_oJ_3(2\psi) \sin 2\phi \cos 3 (2\pi f_m t-\alpha)\\
& +2I_oJ_4(2\psi) \cos 2\phi \cos 4 (2\pi f_m t-\alpha)\\
& \qquad\qquad\qquad\qquad .\\
& \qquad\qquad\qquad\qquad .\\
& \qquad\qquad\qquad\qquad .
\end{aligned}$$

Hierin sind die Faktoren $J_n(2\psi)$ mit $n = 0, 1, 2, \ldots$ die Werte der Besselfunktionen 1. Art der n-ten Ordnung für das Argument $2\psi = 2\psi_o \sin \pi f_m\tau$.

Voraussetzung für die Bestimmung der Winkelgeschwindigkeit $\Omega(t)$ aus dem Ausgangssignal $i(t)$ in Gleichung (6) ist, daß die zeitliche Änderung von $\Omega(t)$ so langsam erfolgt, daß für die über die Fouriertransformation berechenbare Bandbreite $B\phi$ der Sagnac-Phase gilt:

$$B\phi << f_m.$$

In diesem Fall läßt sich von den in (6) aufgeführten Spektrallinien, deren Frequenzen ganzzahlige Harmonische der Modulationsfrequenz $f_m$ sind, jede beliebige Spektrallinie mit geeigneten Filtern separieren und daraus die Sagnac-Phase $\phi(t)$ bzw. die Winkelgeschwindigkeit $\Omega(t)$ bestimmen. Die an den Ausgängen solcher Filter abgreifbaren Amplituden der einzelnen in (6) angegebenen Spektrallinien sind dann:

$$A_1 = 2I_0 J_1(2\psi) \; |\sin 2\varphi|$$
$$A_2 = 2I_0 J_2(2\psi) \; \cos 2\varphi$$
$$A_3 = 2I_0 J_3(2\psi) \; |\sin 2\varphi| \qquad (7)$$

.

.

.

Allgemein kann man für die $\nu$-te Spektrallinien-Amplituden, wenn $\nu$ z.B. geradzahlig ist, schreiben:

$$A_\nu = 2I_0 J_\nu(2\psi)\cos 2\phi \qquad (8).$$

Für $\nu$ geradzahlig ergeben sich entsprechend (7) die Amplituden von z.B. drei benachbarten Spektrallinien des Ausgangssignals i(t):

$$A_{\nu-1} = 2I_0 J_{\nu-1}(2\psi) \; |\sin 2\phi|$$
$$A_\nu = 2I_0 J_\nu(2\psi) \cos 2\phi$$
$$A_\nu + 1 = 2I_0 J_{\nu+1}(2\psi) \; |\sin 2\phi| \qquad (9).$$

Es sind auch ebenso beliebige Spektrallinien verwendbar, von denen zwei der drei von Kosinus der Sagnac-Phase oder zwei der drei vom Sinus der Sagnac-Phase abhängen.

Bildet man den Quotienten aus den zwei Amplituden $A_{\nu-1}$ und $A_\nu$ derjenigen zwei Spektrallinien, von denen die eine vom Sinus des Betrages der Sagnac-Phase$|\,2\phi|$ und die andere vom Kosinus der Sagnac-Phase abhängt, so ergibt sich aus (9)

$$\frac{A_{\nu-1}}{A_\nu} = \frac{J_{\nu-1}(2\psi)}{J_\nu(2\psi)} \; |\tan 2\varphi| \qquad (10)$$

Aus (10) resultiert der Betrag der Sagnac-Phase

$$|\varphi| = 1/2 \; \text{arctg} \left( \frac{A_{\nu-1}}{A_\nu} \cdot \frac{J_\nu(2\psi)}{J_{\nu-1}(2\psi)} \right) \qquad (11).$$

Die Sagnac-Phase $\phi$ läßt sich, ohne daß dabei der Modulationsindex $\psi$ einen Einfluß hat, mit Hilfe der in Fig. 1 dargestellten Schaltungsanordnung auf folgende Weise ermitteln:
Es werden zunächst aus dem elektrischen Ausgangssignal i(t) des Ringinterferometers drei Spektrallinien herausgefiltert und deren Amplituden $A_{\nu-1}$, $A_\nu$, $A_{\nu+1}$ bestimmt. Ein erster Dividierer D1 bildet einen ersten Quotienten Q1 aus den Amplituden $A_{\nu-1}$ und $A_\nu$ [vgl. (11)] von zwei der drei Spektrallinien. Hierfür sind solche Spektrallinien herauszugreifen, von denen eine Spektrallinie eine vom Sinus des Betrages der Sagnac-Phase $|\phi|$ abhängige Amplitude $A_{\nu-1}$ und die andere Spektrallinie eine vom Kosinus der Sagnac-Phase $\phi$ abhängige Amplitude $A_\nu$ aufweist [vgl. (9)].

Wie die Gleichung (11) zeigt, ist bei der Bestimmung der Sagnac-Phase $\phi$ aus zwei Spektrallinien noch der Einfluß des Phasenmodulationsindex $\psi$ über das Verhältnis der Besselfunktionen $J_\nu(2\psi)$ / $J_{\nu-1}(2\psi)$ vorhanden. Der Einfluß des Modulationsindex $\psi$ kann völlig eliminiert werden, wenn noch eine dritte Spektrallinie ausgewertet wird. Und zwar wird von einem zweiten Dividierer D2 ein zweiter Quotient aus den Amplituden von zwei der drei herausgefilterten Spektrallinien gebildet, die beide vom Sinus des Betrages der Sagnac-Phase $|\phi|$ oder vom Kosinus der Sagnac-Phase $\phi$ abhängen.

Z.B. mit den Amplituden $A_{\nu+1}$ und $A_{\nu-1}$ aus (9) folgt:

$$\frac{A_{\nu+1}}{A_{\nu-1}} = \frac{2I_o \; J_{\nu+1} \; (2\psi) \; | \sin 2\mathcal{f}|}{2I_o \; J_{\nu-1} \; (2\psi) \; | \sin 2\mathcal{f}|}$$

$$\frac{A_{\nu+1}}{A_{\nu-1}} = \frac{J_{\nu+1} \; (2\psi)}{J_{\nu-1} \; (2\psi)} \qquad\qquad (12)$$

Zwischen dem in (12) angegebenen Verhältnis der Besselfunktionen $J_{\nu+1}$ $(2\psi)$ / $J_{\nu-1}$ $(2\psi)$ und dem in der Gleichung (9) für die Sagnac-Phase $\phi$ auftretenden Verhältnis der Besselfunktionen $J_\nu$ $(2\psi)$ / $J_{\nu-1}$ $(2\psi)$ besteht eine in der Fig. 2 beispielweise dargestellte Beziehung. Über diese Beziehung ist jedem sich mit dem Argument $2\psi$ ändernden Werteverhältnis zweier Besselfunktionen $J_{\nu+1}$ $(2\psi)$ / $J_{\nu-1}$ $(2\psi)$ ein bestimmtes Werteverhälnis zweier anderer Besselfunktionen $J_\nu$ $(2\psi)$ / $J_{\nu-1}$ $(2\psi)$ zugeordnet. Man kann diese Beziehung den bekannten Besselfunktionsverläufen entnehmen. Es gilt:

$$\frac{J_\nu \; (2\psi)}{J_{\nu-1} \; (2\psi)} = f \; ( \; \frac{J_{\nu+1} \; (2\psi)}{J_{\nu-1} \; (2\psi)} \; ) \qquad\qquad (13)$$

und mit (12)

$$\frac{J_\nu \; (2\psi)}{J_{\nu-1} \; (2\psi)} = f \; ( \; \frac{A_{\nu+1}}{A_{\nu-1}} \; ) \qquad\qquad (14).$$

Nach (14) ist also jedem Verhältnis der gemessenen Amplituden $A_{\nu+1}$ und $A_{\nu-1}$ über die zuvor erläuterte und in Fig. 2 schematisch dargestellte Beziehung ein bestimmtes Verhältnis der von dem Phasenmodulationsindex $\psi$ abhängigen Besselfunktionen $J_\nu$ $(2\psi)$ und $J_{\nu-1}$ zugeordnet. Aus (11) und (14) folgt demnach für den Betrag der Sagnac-Phase $|\phi|$:

$$|\mathcal{f}| = 1/2 \; \text{arctg} \; ( \; \frac{A_{\nu-1}}{A_\nu} \cdot f \; ( \; \frac{A_{\nu+1}}{A_{\nu-1}} \; )) \qquad\qquad (15)$$

Der Betrag der Sagnac-Phase $|\phi|$ läßt sich also allein aus den gemessenen Amplituden $A_{\nu-1}$, $A_\nu$ und $A_{\nu+1}$ dreier Spektrallinien und der in Fig. 2 dargestellen Beziehung zwischen gemessenen Amplituden und Besselfunktionen bestimmen, ohne daß dabei noch der Phasenmodulationsindex $\psi$ eingeht, noch Schwankungen der Intensität $I_o$ eingehen. Deshalb kann vorteilhafterweise auf Regelungen der Lichtintensität $I_o$ und des Modulationsindex $\psi$ verzichtet werden.

Der vom zweiten Dividierer D2 gebildete zweite Quotient Q2 aus den gemessenen Amplituden $A_{\nu+1}$ und $A_{\nu-1}$ wird einer ersten Schaltungseinheit SE1 zugeführt, die diesem zweiten Quotienten nach der in Fig. 2 dargestellten Funktion ein Verhältnis der Besselfunktionswerte $J_\nu$ $(2\psi)$ / $J_{\nu-1}$ $(2\psi)$ zuordnet. Diese erste Schaltungseinheit SE1 kann ein analoger Funktionsgenerator sein, der die aus den Besselfunktionsverläufen abgeleitete Funktion nachbildet. Weniger aufwendig wäre eine aus einem Speicher bestehende Schaltungseinheit SE1, in der tabellarisch zu jedem möglichen Amplitudenverhältnis $A_{\nu+1}$ / $A_{\nu-1}$ das zugehörige Verhältnis der Besselfunktionswerte $J_\nu$ $(2\psi)$ / $J_{\nu-1}$ $(2\psi)$ abgespeichert ist. Aus dem in der ersten Schaltungseinheit SE1 zum jeweiligen Amplitudenverhältnis $A_{\nu+1}$ / $A_{\nu-1}$ ermittelten Verhältnis der Besselfunktionswerte $J_\nu$ $(2\psi)$ /$J_{\nu-1}$ $(2\psi)$ und dem ersten Quotienten Q1 der Amplituden $A_{\nu-1}$ / $A_\nu$ wird von einem Multiplizierer M das Produkt P gebildet. Auf dieses Produkt P wendet eine zweite Schaltungseinheit SE2 die Arcustangensfunktion an, woraus dann der Betrag der Sagnac-Phase $|\phi|$ resultiert. Die zweite Schaltungseinheit SE2 bildet entweder mit analogen Schaltungsmitteln die Arcustangens-Funktion nach oder sie ist als ein digitaler Speicher ausgeführt, in dem die Arcustangens-Funktion tabellarisch abgespeichert ist.

**Patentansprüche**

1. Verfahren zum Ermitteln von Winkelgeschwindigkeiten mit Hilfe eines optischen Faserringinterferometers, wobei die mindestens eine Lichtleitfaserwindung durchlaufenden Lichtwellen sinusförmig phasenmoduliert werden und von einigen Spektrallinien der aus der Lichtleitfaser austretenden interferierenden Lichtwellen die Amplituden bestimmt werden und daraus die der Winkelgeschwindigkeit proportionale Sagnac-Phase ermittelt wird, <u>dadurch gekennzeichnet</u>,
   - daß von drei Spektrallinien die Amplituden ($A_{\nu-1}$, $A_\nu$, $A_{\nu+1}$) bestimmt werden,
   - daß ein erster Quotient (Q1) aus den Amplituden ($A_{\nu-1}$, $A_\nu$) zweier Spektrallinien gebildet wird, von denen die eine vom Sinus und die andere vom Kosinus der Sagnac-Phase abhängt,
   - daß ein zweiter Quotient (Q2) aus den Amplituden ($A_{\nu+1}$, $A_{\nu-1}$) zweier Spektrallinien gebildet wird, die beide vom Sinus oder Kosinus der Sagnac-Phase abhängen, so daß der zweite Quotient (Q2) allein durch das Verhältnis der diesen zwei Spektrallinien zugeordneten, vom Phasenmodulationsindex abhängigen Besselfunktionen gegeben ist,
   - daß aus den Verläufen der Besselfunktionen zu jedem vom Phasenmodulationsindex abhängigen Verhältnis der dem zweiten Quotienten (Q2) zugeordneten Besselfunktionswerten das entsprechende Verhältnis der dem ersten Quotienten zugeordneten Besselfunktionswerte bestimmt wird,
   - daß aus dem ersten Quotienten (Q1) und dem jeweils ermittelten Verhältnis der diesem zugeordneten Besselfunktionswerte ein Produkt (P) gebildet wird und
   - daß durch Anwenden der Arcusstangens-Funktion auf das Produkt (P) der Betrag der Sagnac-Phase $|\phi|$ ermittelt wird.

2. Anordnung zum Ermitteln von Winkelgeschwindigkeiten mit Hilfe eines optischen Faserringinterferometers, der mindestens eine Lichtleitfaserwindung besitzt mit einer die darin sich ausbreitenden Lichtwellen modulierenden Einrichtung, wobei Schaltungseinheiten vorhanden sind, welche von einigen Spektrallinien der aus der Lichtleitfaser austretenden interferierenden Lichtwellen die Amplituden bestimmen und daraus die der Winkelgeschwindigkeit proportionale Sagnac-Phase ermittelt, dadurch gekennzeichnet,
   - daß ein erster Dividierer (D1) vorhanden ist, der einen ersten Quotienten (Q1) aus den Amplituden ($A_{\nu-1}$, $A_\nu$) zweier von drei Spektrallinien bildet, von denen die eine vom Sinus und die andere vom Kosinus der Sagnac-Phase abhängt,
   - daß eine zweiter Dividierer (D2) einen zweiten Quotienten (Q2) aus den Amplituden ($A_{\nu+1}$, $A_{\nu-1}$) von zwei der drei Spektrallinien bildet, die beide vom Sinus oder Kosinus der Sagnac-Phase abhängen, so daß der zweite Quotient (Q2) allein durch das Verhältnis der diesen zwei Spektrallinien zugeordneten, vom Phasenmodulationsindex abhängigen Besselfunktionen gegeben ist,
   - daß eine erste Schaltungseinheit (SE1) vorhanden ist, die aus den Besselfunktionsverläufen zu jedem vom Phasenmodulationsindex abhängigen Verhältnis der dem zweiten Quotienten (Q2) zugeordneten Besselfunktionswerten das entsprechende Verhältnis der dem ersten Quotienten (Q1) zugeordneten Besselfunktionswerte bestimmt,
   - daß ein Multiplizierer (M) aus dem ersten Quotienten (Q1) und dem in der ersten Schaltungseinheit (SE1) ermittelten Verhältnis der dem ersten Quotienten (Q1) zugeordneten Besselfunktionswerte ein Produkt (P) bildet und
   - daß eine zweite Schaltungseinheit (SE2) vorhanden ist, welche auf das Produkt (P) die Arcustangens-Funktion anwendet, woraus der Betrag der Sagnac-Phase $|\phi|$ resultiert.

3. Anordnung nach Anspruch 2, dadurch gekennzeichnet, daß die erste Schaltungseinheit (SE1) aus einem Speicher besteht, in dem tabellarisch zu jedem möglichen Verhältnis der dem zweiten Quotienten (Q2) zugeordneten Besselfunktionswerte das entsprechende Verhältnis der dem ersten Quotienten (Q1) zugeordneten Besselfunktionswerte abgespeichert sind.

4. Anordnung nach Anspruch 2, dadurch gekennzeichnet, daß die zweite Schaltungseinheit (SE2) aus einem Speicher besteht, in dem tabellarisch zu jedem möglichen aus dem Multiplizierer (M) hervorgehenden Produkt (P) der Arcustangens dieses Produkts (P) abgespeichert ist.

**5.** Anordnung nach Anspruch 2, dadurch gekennzeichnet, daß die erste Schaltungseinheit (SE1) aus einem Speicher besteht, in dem tabellarisch zu jedem möglichen Verhältnis der dem zweiten Quotienten (Q2) zugeordneten Besselfunktionswerte das entsprechende Verhältnis der dem ersten Quotienten (Q1) zugeordneten Besselfunktionswerte abgespeichert sind und daß die zweite Schaltungseinheit (SE2) aus einem Speicher besteht, in dem tabellarisch zu jedem möglichen aus dem Multiplizierer (M) hervorgehenden Produkt (P) der Arcustangens dieses Produkts (P) abgespeichert ist.

**Claims**

**1.** Method for ascertaining angular speeds with the aid of an optical fibre ring interferometer, wherein the light waves running through at least one optical conductor fibre turn are sinusoidally modulated in phase and the amplitudes are ascertained of some spectral lines of the interfering light waves issuing from the optical conductor fibre and the Sagnac-phase proportional to the angular speed is ascertained therefrom, characterised thereby,

- that the amplitudes ($A_{\nu-1}$, $A_\nu$, $A_{\nu+1}$) of three spectral lines are ascertained,
- that a first quotient (Q1) is formed of the amplitudes ($A_{\nu+1}$,$A_{\nu-1}$) of two spectral lines, of which the one depends on the sine and the other on the cosine of the Sagnac-phase,
- that a second quotient (Q2) is formed of the amplitudes ($A_{\nu+1}$, $A_{\nu-1}$) of two spectral lines which both depend on the sine or cosine of the Sagnac-phase, so that the second quotient (Q2) is given solely by the ratio of the Bessel functions which are associated with these two spectral lines and dependent on the phase modulation index,
- that the corresponding ratio of the Bessel function values associated with the first quotient (Q1) is ascertained from the courses of the Bessel functions for each ratio, dependent on the phase modulation index, of the Bessel function values associated with the second quotient (Q2),
- that a product (P) is formed of the first quotient (Q1) and the respectively ascertained ratio of the Bessel function values associated therewith and
- that the modulus of the Sagnac-phase $|\phi|$ is ascertained through application of the arctan function to the product (P).

**2.** Arrangement for ascertaining angular speeds with the aid of an optical fibre ring interferometer which comprises at least one optical conductor fibre turn with an equipment modulating the light waves propagating therein, wherein circuit units are present, which ascertain the amplitudes of some spectral lines of the interfering light waves issuing from the optical conductor fibre and, therefrom, the Sagnac-phase proportional to the angular speed, characterised thereby,

- that a first divider (D1) is present, which forms a first quotient (Q1) of the amplitudes ($A_{\nu-1}$, $A_\nu$) of two out of three spectral lines, of which the one depends on the sine and the other on the cosine of the Sagnac-phase,
- that a second divider (D2) forms a second quotient (Q2) of the amplitudes ($A_{\nu+1}$, $A_{\nu-1}$) of two out of the three spectral lines which both depend on the sine or cosine of the Sagnac-phase, so that the second quotient (Q2) is given solely by the ratio of the Bessel functions which are associated with these two spectral lines and dependent on the phase modulation index,
- that a first circuit unit (SE1) is present, which ascertains the corresponding ratio of the Bessel function values associated with the first quotient (Q1) from the courses of the Bessel functions for each ratio, dependent on the phase modulation index, of the Bessel function values associated with the second quotient (Q2),
- that a multiplexer (M) forms a product (P) of the first quotient (Q1) and the ratio, ascertained in the first circuit unit (SE1), of the Bessel function values associated the first quotient (Q1) and
- that a second circuit unit (SE2) is present, which applies the arctan function to the product (P), from which results the modulus of the Sagnac-phase $|\phi|$.

**3.** Arrangement according to claim 2, characterised thereby, that the first circuit unit (SE1) consists of a storage device, in which the corresponding ratio of the Bessel function values associated with the first quotient (Q1) is filed tabularly for each possible ratio of the Bessel function values associated the second quotient (Q2).

**4.** Arrangement according to claim 2, characterised thereby, that the second circuit (SE2) consists of a storage device, in which the arctan of any possible product (P) emanating from the multiplexer (M), is filed tabularly.

5. Arrangement according to claim 2, characterised thereby, that the first circuit unit (SE1) consists of a storage device, in which the corresponding ratio of the Bessel function values associated with the first quotient (Q1) is filed tabularly for each possible ratio of the Bessel function values associated the second quotient (Q2) and that the second circuit unit (SE2) consists of a storage device, in which the arctan of any possible product (P) emanating from the multiplexer (M) is filed tabularly.

**Revendications**

1. Procédé pour déterminer des vitesses angulaires à l'aide d'un interféromètre annulaire à fibre optique, procédé dans lequel on module en phase, en forme sinusoïdale, les ondes lumineuses, dont il y a au moins une, parcourant une spire de la fibre guide de la lumière et dans lequel on détermine les amplitudes à partir de quelques raies spectrales des ondes lumineuses qui font interférence et sortent de la fibre guide de la lumière et on en déduit la phase de Sagnac proportionnelle à la vitesse angulaire, procédé caractérisé par le fait
   - qu'à partir de trois raies spectrales on détermine les amplitudes ($A_{\nu-1}$, $A_\nu$, $A_{\nu+1}$),
   - que l'on forme un premier quotient (Q1) à partir des amplitudes ($A_{\nu-1}$, $A_\nu$) de deux raies spectrales dont l'une dépend du sinus et l'autre du cosinus de la phase de Sagnac,
   - que l'on forme un second quotient (Q2) à partir des amplitudes ($A_{\nu+1}$, $A_{\nu-1}$) de deux raies spectrales qui dépendent toutes les deux du sinus ou du cosinus de la phase de Sagnac, de sorte que le second quotient (Q2) seul est donné par le rapport des fonctions de Bessel correspondant à ces deux raies spectrales et dépendant de l'indice de modulation de phase,
   - qu'à partir des courbes des fonctions de Bessel correspondant à chaque rapport, dépendant de l'indice de modulation de phase, des valeurs de la fonction de Bessel correspondant au second quotient (Q2), on détermine le rapport correspondant des valeurs de la fonction de Bessel correspondant au premier quotient,
   - qu'à partir du premier quotient (Q1) et du rapport, chaque fois déterminé, des valeurs de la fonction de Bessel qui lui correspondent, on forme un produit (P) et
   - qu'en appliquant la fonction arc tangente sur le produit (P), on détermine la valeur absolue de la phase de Sagnac ($\phi$).

2. Dispositif pour déterminer des vitesses angulaires à l'aide d'un interféromètre annulaire à fibre optique qui possède au moins une spire de fibre guide de la lumière avec un dispositif modulant les ondes lumineuses qui s'y propagent, dispositif dans lequel il existe des unités de circuit qui déterminent les amplitudes à partir de quelques raies spectrales des ondes lumineuses qui sont en interférrence et sortent de la fibre guide de la lumière et, de ce résultat, déterminent la phase de Sagnac proportionnelle à la vitesse angulaire, dispositif caractérisé par le fait
   - qu'il existe un premier diviseur (D1) qui forme un premier quotient (Q1) à partir des amplitudes ($A_{\nu-1}$, $A_\nu$) de deux des trois raies spectrales dont l'une dépend du sinus et l'autre du cosinus de la phase de Sagnac,
   - qu'un second diviseur (D2) forme un second quotient (Q2) à partir des amplitudes ($A_{\nu+1}$, $A_{\nu-1}$) de deux des trois raies spectrales qui dépendent toutes les deux du sinus ou du cosinus de la phase de Sagnac, de sorte que le second quotient (Q2) seul est donné par le rapport des fonctions de Bessel correspondant à ces deux raies spectrales et dépendant de l'indice de modulation de phase,
   - qu'il existe une première unité de circuit (SE1) qui, à partir des courbes de la portion de Bessel correspondant à chaque rapport, fonction de l'indice de modulation de phase, des valeurs de la fonction de Bessel correspondant au second quotient (Q2), détermine le rapport correspondant des valeurs de la fonction de Bessel correspondant au premier quotient (Q1),
   - qu'à partir du premier quotient (Q1) et du rapport, déterminé dans la première unité de circuit (SE1), des valeurs de la fonction de Bessel correspondant au premier quotient (Q1), un multiplicateur (M) forme un produit (P) et
   - qu'il existe une seconde unité de circuit (SE2) qui applique sur le produit (P) la fonction arc tangente, d'où résulte la valeur absolue de la phase de Sagnac $|\phi|$.

3. Dispositif selon la revendication 2, caractérisé par le fait que la première unité de circuit (SE1) est constituée d'une mémoire dans laquelle est mémorisé, sous forme de tableau, pour chaque rapport possible des valeurs de la fonction de Bessel correspondant au second quotient (Q2), le rapport, correspondant, des valeurs de la fonction de Bessel correspondant au premier quotient (Q1).

**4.** Dispositif selon la revendication 2, caractérisé par le fait que la seconde unité de circuit (SE2) est constituée d'une mémoire dans laquelle est mémorisée, sous forme de tableau, pour chaque produit (P) possible provenant du multiplicateur (M), la valeur arc tangente de ce produit (P).

**5.** Dispositif selon la revendication 2, caractérisé par le fait que la première unité de circuit (SE1) est constituée d'une mémoire dans laquelle est mémorisé, sous forme de tableau, pour chaque rapport possible des valeurs de la fonction de Bessel correspondant au second quotient (Q2), le rapport correspondant des valeurs de la fonction de Bessel correspondant au premier quotient (Q1), et que la seconde unité de circuit (SE2) est constituée d'une mémoire dans laquelle est mémorisée, sous forme de tableau, pour chaque produit possible (P) provenant du multiplicateur (M), la valeur arc tangente de ce produit (P).

$A_{\nu-1}$

D1

$A_\nu$

Q1

M

SE2

P

$A_{\nu+1}$

Q2

D2

SE1

Fig.1

$$\frac{\Im_\nu(2\Psi)}{\Im_{\nu-1}(2\Psi)}$$

$$\frac{\Im_{\nu+1}(2\Psi)}{\Im_{\nu-1}(2\Psi)} = \frac{A_{\nu+1}}{A_{\nu-1}}$$

Fig.2